# EUROPEAN PATENT APPLICATION

(11) **EP 3 989 185 A1**
(43) Date of publication of application: **27.04.2022**
(21) Application number: 21177053.2
(22) Date of filing: 01.06.2021
(51) Int. Cl.: G07C 5/00, G07C 5/08, B60C 23/04, B60C 23/06, B60W 50/00, H04B 7/185

(54) **METHOD, APPARATUS AND DEVICE FOR MONITORING ANTOMOBILE BASED ON SATELLITE, AND COMPUTER AND MEDIUM**

(30) Priority: 22.10.2020 CN 202011140168
(71) Applicant: Citic Dicastal Co., Ltd., 066011 Quinhuangdao, Heibei (CN)
(72) Inventor: LI, Xi, Qinhuangdao, 066011 (CN); ZHU, Zhihua, Qinhuangdao, 066011 (CN); XU, Shiwen, Qinhuangdao, 066011 (CN); LI, Shide, Qinhuangdao, 066011 (CN); DAI, Yao, Qinhuangdao, 066011 (CN); ZHANG, Xi, Qinhuangdao, 066011 (CN); SHENG, Hongwei, Qinhuangdao, 066011 (CN)
(74) Representative: Gong, Jinping

(57) **Abstract**

The present invention discloses a method, apparatus and device for monitoring an automobile based on a satellite, and a computer and a medium. The method includes the steps: acquiring first information of the automobile; sending the first information to the satellite through a satellite data transfer unit DTU; and receiving and displaying second information from a cloud monitoring platform. According to the method, apparatus and device for monitoring the automobile based on the satellite, and the computer and the medium provided by the present invention, an automobile in a remote region can be monitored in time.

## Description

### Field of the Invention

The present invention relates to the technical field of vehicle manufacturing, in particular to a method, apparatus and device for monitoring an automobile based on a satellite, and a computer and a medium.

### Background of the Invention

With economic development and technological progress, smart transportation has become an important development direction of human life. How to dynamically monitor a working status of vehicles is an important part of smart transportation.

In the prior art, dynamically monitoring a working status of vehicles is generally implemented by sending vehicle information to a cloud monitoring platform through a public communication network. However, in a remote region, a signal of the public communication network is weak or none, causing the cloud monitoring platform to be unable to acquire the working status of vehicles in time.

### Summary of the Invention

In view of the above, an embodiment of the present invention expects to provide a method, apparatus and device for monitoring an automobile based on a satellite, and a computer and a medium, which can monitor an automobile in a remote region in time.

In order to achieve the foregoing objective, in a first aspect, an embodiment of the present invention provides a method for monitoring an automobile based on a satellite, the method including the following steps:
acquiring first information of the automobile;
sending the first information to the satellite through a satellite data transfer unit DTU; and
receiving and displaying second information from a cloud monitoring platform.

In the above solution, the step of acquiring the first information of the automobile includes:
acquiring a load of the automobile through a deformation sensor;
acquiring a tire pressure of a wheel of the automobile through a pressure sensor; and
acquiring a temperature of a wheel hub of the automobile through a temperature sensor.

In the above solution, acquiring the load of the automobile through the deformation sensor includes:
acquiring deformation data of the wheel hub of the automobile after being loaded through the deformation sensor; and
acquiring the load of the automobile by processing the deformation data through a preset algorithm.

In a second aspect, an embodiment of the present invention provides a method for monitoring an automobile based on a satellite, the method including the following steps:
receiving first information from the satellite;
acquiring second information by pre-processing the first information; and
sending the second information to the automobile.

In the above solution, the step of receiving the first information from the satellite includes:
receiving the first information from the satellite through a ground gateway station.

In a third aspect, an embodiment of the present invention provides an apparatus for monitoring an automobile based on a satellite, the apparatus including an acquisition module, a sending module and a receiving module, wherein
the acquisition module is configured to acquire first information of the automobile;
the sending module is configured to send the first information to the satellite through a satellite data transfer unit DTU; and
the receiving module is configured to receive and display second information from a cloud monitoring platform.

In a fourth aspect, an embodiment of the present invention provides a device for monitoring an automobile based on a satellite, the device including:
a monitoring unit configured to acquire deformation data of a wheel hub, a tire pressure of a wheel and a temperature of a wheel hub;
a satellite communication unit configured to send data acquired by the monitoring unit to the satellite; and
a display unit configured to display second information received from a cloud monitoring platform.

In the above solution, the monitoring unit includes a deformation sensor, a pressure sensor and a temperature sensor; the satellite communication unit includes a satellite DTU; and the display unit includes a display screen.

In a fifth aspect, an embodiment of the present invention provides a vehicle-mounted computer, the vehicle-mounted computer including a memory, a communication bus and a processor, wherein
the memory is configured to store a method program for monitoring an automobile based on a satellite;
the communication bus is configured to implement connection communication between the memory and the processor; and
the processor is configured to execute the method program for monitoring the automobile based on the satellite stored in the memory to implement the steps of any method for monitoring the automobile based on the satellite as described above.

In a sixth aspect, an embodiment of the present invention provides a computer-readable storage medium, wherein an executable program is stored on the computer-readable storage medium, and the executable program, when executed by a processor, implements the steps of any method for monitoring the automobile based on the satellite as described above.

According to the method, apparatus and device for monitoring the automobile based on the satellite, and the computer and the medium in an embodiment of the present invention, the method includes the steps: acquiring first information of the automobile; sending the first information to the satellite through a satellite data transfer unit DTU; and receiving and displaying second information from a cloud monitoring platform. It can be seen that according to the method, apparatus and device for monitoring the automobile based on the satellite, and the computer and the medium in an embodiment of the present invention, an automobile in a remote region can be monitored in time by transmitting state data of the automobile to the satellite through a satellite DTU and sending the data to the cloud monitoring platform through the satellite.

Other beneficial effects of the embodiments of the present invention will be further described in specific implementations in conjunction with specific technical solutions.

### Brief Description of the Drawing

FIG. 1 is a schematic flowchart of a method for monitoring an automobile based on a satellite according to Embodiment 1 of the present invention;
FIG. 2 is a schematic flowchart of a method for monitoring an automobile based on a satellite according to Embodiment 2 of the present invention;
FIG. 3 is a schematic diagram of a device or parts involved in the method for monitoring an automobile based on a satellite according to an embodiment of the present invention;
FIG. 4 is a schematic structural diagram of an apparatus for monitoring an automobile based on a satellite according to Embodiment 3 of the present invention;
FIG. 5 is a schematic structural diagram of a device for monitoring an automobile based on a satellite according to Embodiment 4 of the present invention;
FIG. 6 is a schematic structural diagram of a vehicle-mounted computer according to Embodiment 5 of the present invention.

### Detailed Description of Embodiments

In view of the technical problems existing in the prior art, an embodiment of the present invention provides a method for monitoring an automobile based on a satellite, wherein the method may include the following steps:
acquiring first information of the automobile;
sending the first information to a satellite through a satellite data transfer unit (DTU); and
receiving and displaying second information from a cloud monitoring platform.

The first information here is original driving information collected from the automobile, and the second information is processed by the cloud monitoring platform.

It can be understood that the step of acquiring the first information of the automobile may include:
acquiring a load of the automobile through a deformation sensor;
acquiring a tire pressure of a wheel of the automobile through a pressure sensor; and
acquiring a temperature of a wheel hub of the automobile through a temperature sensor.

The information is some driving information that is prone to problems during long-distance driving. In this way, a state of the automobile can be better monitored, which is a better implementation. Specifically, a detection accuracy of the load of the automobile, the tire pressure and the temperature of the wheel hub can reach 95% or above.

It can be understood that acquiring the load of the automobile through the deformation sensor may include:
acquiring deformation data of the wheel hub of the automobile after being loaded through the deformation sensor; and
acquiring the load of the automobile by processing the deformation data through a preset algorithm.

Through the preset algorithm, the load of the automobile can be accurately acquired according to the deformation data, which is a more scientific implementation. The principle of the preset algorithm is to convert a resistance signal generated by the deformation sensor into the load of the automobile according to a conversion rule. The conversion rule is acquired after theoretical calculation plus practical correction. The specific content of the preset algorithm is not the content disclosed in the embodiments of the present invention and will not be described in detail.

Further, the conversion rule can be acquired by deep learning a large amount of data, and the accuracy of acquiring the load can reach 95% or above. Deep learning can be to build a neural network model and learn a large amount of practical data and will not be described in detail.

An embodiment of the present invention further provides a method for monitoring an automobile based on a satellite, wherein the method may include the following steps:
receiving first information from the satellite;
acquiring second information by pre-processing the first information; and
sending the second information to the automobile.

It can be understood that the step of receiving the first information from the satellite may include:
receiving the first information from the satellite through a ground gateway station.

A large amount of parallel information can be received at the same time through the ground gateway station, which is a one-to-many design, that is, the first information of many automobiles can be received at the same time. The ground gateway station can be connected to a cloud monitoring platform through a public mobile communication network. In this way, actual application requirements are met, which is a better implementation, since only one cloud monitoring platform is needed, while there are many automobiles being monitored.

An embodiment of the present invention further provides an apparatus for monitoring an automobile based on a satellite, and the apparatus may include an acquisition module, a sending module and a receiving module, wherein
the acquisition module is configured to acquire first information of the automobile;
the sending module is configured to send the first information to the satellite through a satellite data transfer unit DTU; and
the receiving module is configured to receive and display second information from a cloud monitoring platform.

An embodiment of the present invention further provides a device for monitoring an automobile based on a satellite, the device including:
a monitoring unit configured to acquire deformation data of a wheel hub, a tire pressure of a wheel and a temperature of a wheel hub;
a satellite communication unit configured to send data acquired by the monitoring unit to the satellite; and
a display unit configured to display second information received from a cloud monitoring platform.

It can be understood that the monitoring unit includes a deformation sensor, a pressure sensor and a temperature sensor; the satellite communication unit includes a satellite DTU; and the display unit includes a display screen.

Specifically, the deformation sensor is configured to acquire a load of the automobile;
the pressure sensor is configured to acquire a tire pressure of a wheel of the automobile; and
the temperature sensor is configured to acquire a temperature of a wheel hub of the automobile.

The above load, tire pressure and temperature are some driving information that is prone to problems during long-distance driving. In this way, a state of the automobile can be better monitored, which is a better implementation.

The satellite DTU is configured to send automobile information directly to the satellite. The satellite DTU has the advantages of getting rid of shackles of ground networks, long communication distance, rapid and flexible networking, short construction period and low cost, which is a better implementation.

An embodiment of the present invention further provides a vehicle-mounted computer, the vehicle-mounted computer including a memory, a communication bus and a processor, wherein
the memory is configured to store a method program for monitoring an automobile based on a satellite;
the communication bus is configured to implement connection communication between the memory and the processor; and
the processor is configured to execute the method program for monitoring the automobile based on the satellite stored in the memory to implement the steps of any method for monitoring the automobile based on the satellite as described above.

An embodiment of the present invention further provides a computer-readable storage medium, wherein an executable program is stored on the computer-readable storage medium, and the executable program, when executed by a processor, implements the steps of any method for monitoring the automobile based on the satellite as described above.

The present invention will be further described in detail below in conjunction with the drawings and specific embodiments. It should be understood that the specific embodiments described herein are only used to explain the present invention, but not to limit the present invention.

### Embodiment 1

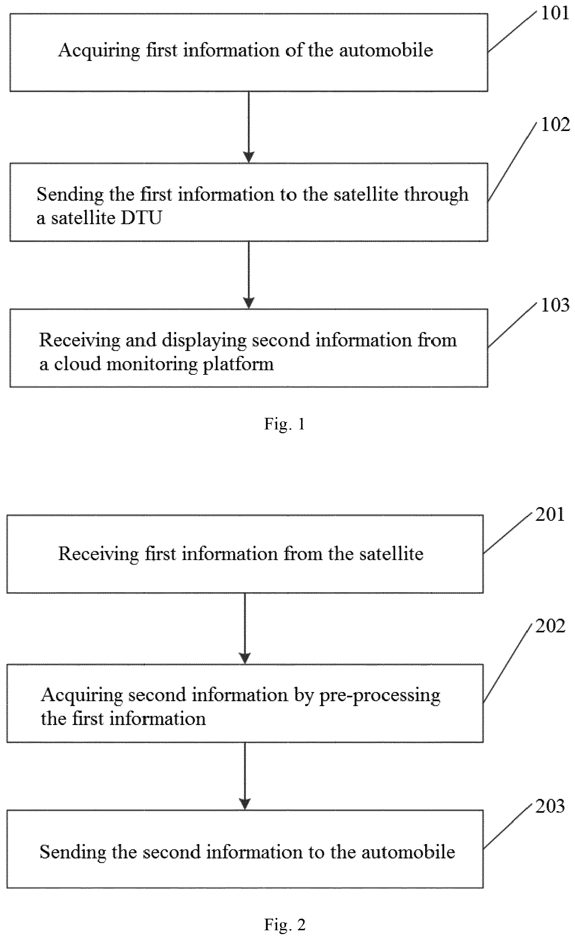

This embodiment provides a method for monitoring an automobile based on a satellite. The method can be implemented by a vehicle-mounted computer or an independent computer connected to a monitoring sensor of an automobile. As shown in FIG. 1, the method includes:
Step 101: acquiring first information of the automobile.

In this embodiment, acquiring the first information of the automobile includes:
acquiring a load of the automobile through a deformation sensor;
acquiring a tire pressure of a wheel of the automobile through a pressure sensor; and
acquiring a temperature of a wheel hub of the automobile through a temperature sensor.

That is to say, in this embodiment, the first information includes a load of the automobile, a tire pressure of a wheel of the automobile, and a temperature of a wheel hub of the automobile.

In this embodiment, acquiring the load of the automobile through the deformation sensor includes:
acquiring deformation data of the wheel hub of the automobile after being loaded through the deformation sensor; and
acquiring the load of the automobile by processing the deformation data through a preset algorithm.

Here, both the tire pressure of the wheel and the temperature of the wheel hub are acquired directly through sensors, while the load of the automobile is acquired by processing data acquired by the deformation sensor through a preset algorithm, which will not be described in detail with reference to the preceding content.

Step 102: sending the first information to the satellite through a satellite DTU.

The satellite DTU is configured to send automobile information directly to the satellite. In this way, the monitoring of the automobile will not be affected in a remote region without network.

In this embodiment, the satellite DTU is connected to each sensor through a Modbus communication protocol, which is more efficient and more accurate. Modbus is a serial communication protocol, which was published by Modicon company (now Schneider Electric) in 1979 for the use of Programmable Logic Controller (PLC) communication. Modbus has become an industry standard (De facto) of communication protocols in the industrial field, and is now a common connection mode between industrial electronic devices.

Step 103: receiving and displaying second information from a cloud monitoring platform.

The second information can also be sent to the automobile in addition to being used in the cloud monitoring platform, that is, monitoring the automobile in the cloud monitoring platform and analyzing and judging an operating state of the automobile. In order to make an automobile driver better understand a current operating state of the automobile, a vehicle-mounted computer or an independent computer can receive and display the second information from the cloud monitoring platform. A display place can be a display screen of a center console, which is a better implementation for the driver to understand. It can also be other places that can be displayed, such as a screen of an independent computer.

The receiving process also requires a satellite, that is, a cloud monitoring platform sends second information to a ground gateway station, the ground gateway station forwards the second information to the satellite, and the satellite directly sends the second information to a satellite DTU of the automobile. In this way, the vehicle-mounted computer receives the second information. A large amount of parallel information can be sent at the same time through the ground gateway station, that is, the information can be sent to many automobiles at the same time.

Wherein, the ground gateway station is in communication with the cloud monitoring platform through a public mobile communication network.

The aforementioned public mobile communication network can include the 2nd generation (2G) global system for mobile communication (GSM)/code division multiple access (CDMA), time division-synchronous code division multiple access (TD-SCDMA)/code division multiple access 2000 (CDMA 2000)/wideband code division multiple access (WCDMA) of the 3rd generation (3G) mobile communication, time division long term evolution (TD-LTE)/frequency division duplexing long term evolution (FDD-LTE) of the 4th generation (4G) mobile communication and 5th generation mobile networks (5G), etc., which is not limited to this, and can also be other networks that can realize communication.

### Embodiment 2

This embodiment provides a method for monitoring an automobile based on a satellite, and the method can be implemented by a cloud monitoring platform. As shown in FIG. 2, the method includes:
Step 201: receiving first information from the satellite.

In this embodiment, receiving the first information from the satellite includes:
receiving the first information from the satellite through a ground gateway station.

Step 202: acquiring second information by pre-processing the first information.

The pre-processing here refers to the classification, statistics, and graphics of scattered data, such as, eliminating some erroneous and distorted data through classification and statistics, and vividly displaying changes in data by drawing a trend line. Further analysis, reasoning and prediction, etc. can be made, such as analyzing whether an automobile has low tire pressure of a wheel or a high temperature of a wheel hub due to an excessive load, and predicting a probability of damage to an automobile due to an excessive load and the like.

Step 203: sending the second information to the automobile.

Same as the step 101 in the first embodiment, a satellite is required for sending, that is, a cloud monitoring platform sends the second information to a ground gateway station, the ground gateway station forwards the second information to the satellite, and the satellite directly sends the second information to the automobile.

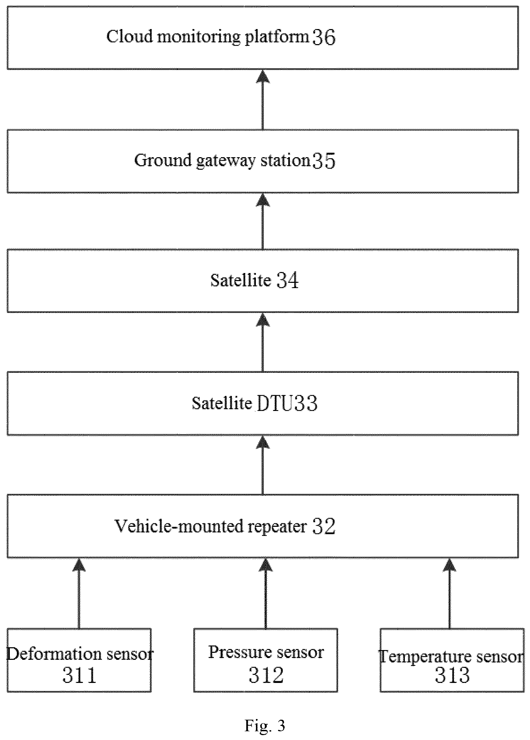

In order to more clearly explain the method for monitoring an automobile based on a satellite in an embodiment of the present invention, devices or parts involved in the method and a transfer process of the first information between these devices or parts are described below in details. As shown in FIG. 3, the devices or parts include:
a deformation sensor 311 configured to acquire a load of the automobile;
a pressure sensor 312 configured to acquire a tire pressure of a wheel of the automobile;
a temperature sensor 313 configured to acquire a temperature of a wheel hub of the automobile;
a vehicle-mounted repeater 32 configured to collect data from each sensor on the automobile, that is, the first information, and forward the first information to a satellite DTU 33;
the satellite DTU 33 configured to send the first information forwarded by the vehicle-mounted repeater 32 to a satellite 34;
the satellite 34 configured to receive the first information sent by the satellite DTU 33 and forward the first information to a ground gateway station 35;
the ground gateway station 35 configured to receive the first information sent by the satellite 34 and forward the first information to a cloud monitoring platform 36; and
the cloud monitoring platform 36 configured to process the first information, and display the processed second information to a staff of the cloud monitoring platform 36, and also send the processed second information to the automobile if necessary.

The deformation sensor 311, the pressure sensor 312 and the temperature sensor 313 are all connected to the vehicle-mounted repeater 32.

The vehicle-mounted repeater 32 is connected to the satellite DTU 33, and both the satellite DTU 33 and the ground gateway station 35 maintain a communication connection with the satellite 34 through a radio signal of a specific band. The ground gateway station 35 and the cloud monitoring platform 36 maintain a communication connection through a public mobile communication network. Here, a band range of the radio signal can refer to a general communication satellite, which is not the content disclosed in the present invention and will not be described in detail.

Specifically, the vehicle-mounted repeater 32 also has a dual-mode positioning function of global positioning system (GPS) and BeiDou navigation satellite system (BDS), and the positioning of the vehicle-mounted repeater 32 can support multiple scenarios and multiple conditions, and can perform stable and efficient positioning in various scenarios.

### Embodiment 3

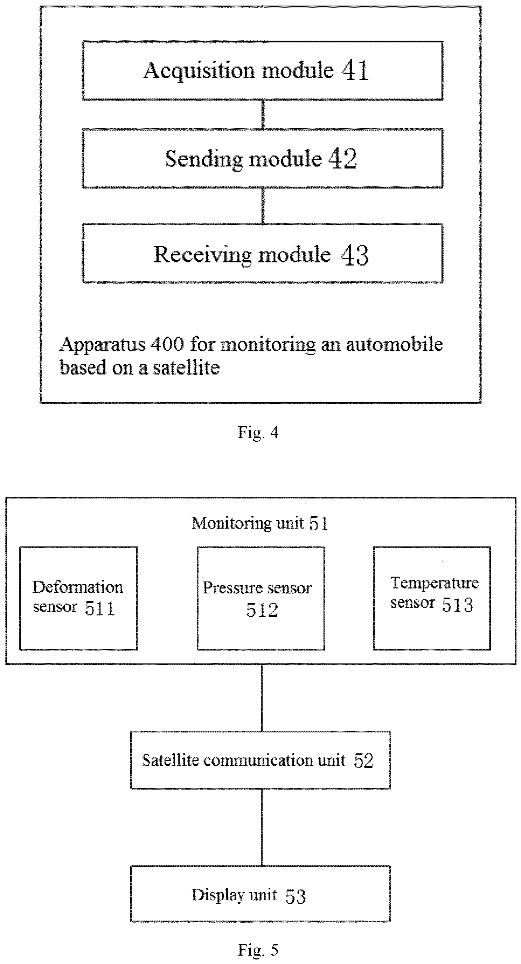

This embodiment provides an apparatus for monitoring an automobile based on a satellite. As shown in FIG. 4, the apparatus 400 includes an acquisition module 41, a sending module 42 and a receiving module 43, wherein
the acquisition module 41 is configured to acquire first information of the automobile;
the sending module 42 is configured to send the first information to the satellite through a satellite data transfer unit DTU; and
the receiving module 43 is configured to receive and display second information from a cloud monitoring platform.

In this embodiment, the acquisition module 41 is specifically configured to:
acquire a load of the automobile through a deformation sensor;
acquire a tire pressure of a wheel of the automobile through a pressure sensor; and
acquire a temperature of a wheel hub of the automobile through a temperature sensor.

In this embodiment, the acquisition module 41 is further configured to:
acquire deformation data of the wheel hub of the automobile after being loaded through the deformation sensor; and
acquire the load of the automobile by processing the deformation data through a preset algorithm.

The apparatus in an embodiment of the present invention can be an apparatus installed in a vehicle, or an independent apparatus connected to and being in communication with the vehicle.

In some embodiments, the apparatus in the embodiments of the present invention can be configured to execute the method of monitoring the automobile based on the satellite described in the above embodiments, and can also certainly include modules for executing any process and/or step in the method of monitoring the automobile based on the satellite described in the foregoing embodiments, which is not repeated herein for brevity.

The description of the above apparatus embodiment is similar to the description of the above method embodiment, and has similar beneficial effects as the method embodiment. For technical details not disclosed in the apparatus embodiment of the present invention, the description of the method embodiment of the present invention should be referred to for understanding.

Modules included in the embodiment of the present invention can be implemented by a processor in a vehicle, or can also be certainly implemented by a logic circuit in the vehicle. In the implementation process, the processor may be a central processing unit (CPU), a microprocessor (MPU), a digital signal processor (DSP), or a field programmable gate array (FPGA), etc.

### Embodiment 4

An embodiment of the present invention further provides a device for monitoring an automobile based on a satellite. As shown in FIG. 5, the device includes: a monitoring unit 51, a satellite communication unit 52 and a display unit 53, wherein the monitoring unit includes a deformation sensor 511, a pressure sensor 512 and a temperature sensor 513; the satellite communication unit includes a satellite DTU; and the display unit includes a display screen.

The monitoring unit 51 is configured to monitor a load of a vehicle, a tire pressure of a wheel and a temperature of a wheel hub of the vehicle;
the satellite communication unit 52 is configured to send data acquired by the monitoring unit to the satellite; and
the display unit 53 is configured to display second information received from a cloud monitoring platform.

It can be understood that the deformation sensor 511 is the same as the deformation sensor 311 mentioned in the Embodiment 2, the pressure sensor 512 is the same as the pressure sensor 312 mentioned in the Embodiment 2, and the temperature sensor 513 is the same as the temperature sensor 313 mentioned in the Embodiment 2.

### Embodiment 5

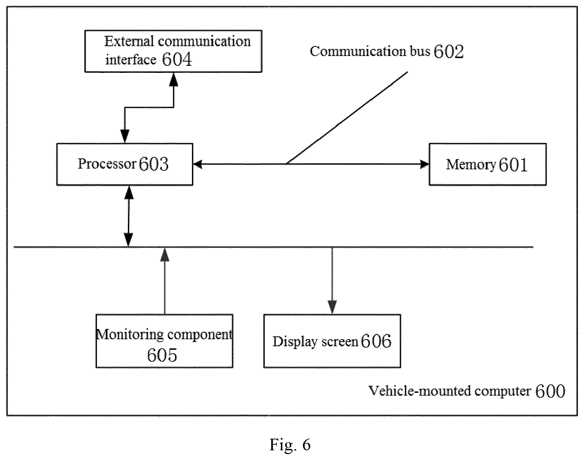

As shown in FIG. 6, an embodiment of the present invention further provides a vehicle-mounted computer, the vehicle-mounted computer 600 including a memory 601, a communication bus 620 and a processor 603, wherein
the memory 601 is configured to store a method program for monitoring an automobile based on a satellite and collected deformation data;
the communication bus 602 is configured to implement connection communication between the memory and the processor; and
the processor 603 is configured to execute the method program for monitoring the automobile based on the satellite stored in the memory to implement the steps of the method described in the Embodiment 1.

Specifically, the processor 603 may be a multi-core processor based on a reduced instruction set computer (RISC) architecture; and the memory 601 may be a high-capacity magnetic memory.

Specifically, the vehicle-mounted computer 600 further includes: an external communication interface 604, a monitoring component 605 and a display screen 606, wherein
the external communication interface 604 may be configured to be in communication with the outside, an external terminal includes a server or a client, and the external communication interface 604 may include a wired interface and a wireless interface;
the monitoring component 605 may be configured to monitor a load of a vehicle, a tire pressure of a wheel and a temperature of a wheel hub of the vehicle; and
the display screen 606 may be configured to display the acquired load of the vehicle, the acquired tire pressure of the wheel, and the acquired temperature of the wheel hub of the vehicle, and a determined operating status of the vehicle.

The description of the above vehicle-mounted computer embodiment is similar to the description of the above method embodiment, and has similar beneficial effects as the method embodiment. For technical details not disclosed in the vehicle-mounted computer of this embodiment, the description of the method embodiment of the present invention should be referred to for understanding.

### Embodiment 6

An embodiment of the present invention further provides a computer-readable storage medium, wherein an executable program is stored on the computer-readable storage medium, and the executable program, when executed by a processor, implements the steps of the method for monitoring the automobile based on the satellite as described in the Embodiment 1.

The computer-readable storage medium may be a high-capacity magnetic memory.

The description of the above computer-readable storage medium embodiment is similar to the description of the above method embodiment, and has similar beneficial effects as the method embodiment. For technical details not disclosed in the computer-readable storage medium of this embodiment, the description of the method embodiment of the present invention should be referred to for understanding.

It is to be noted that the terms "comprise", "include" or any other variants thereof are intended to cover non-exclusive inclusion herein, so that a process, method, article, or apparatus that comprises a series of elements comprises not only those elements, but those other elements that are not explicitly listed, or also comprises elements inherent to this process, method, article or apparatus. If there are no more restrictions, the element defined by the sentence "comprising a..." does not exclude the existence of other same elements in the process, method, article, or apparatus that comprises the element.

In the embodiments of the present invention, unless otherwise specified and defined, the term "connection" should be understood broadly, for example, it may be electrical connection, may also be internal communication between two elements, may be direct connection, and may also be indirect connection via an intermediary. A person of ordinary skill in the art may understand the specific meaning of the above term as the case may be.

The term "first/second/third" involved in the embodiments of the present invention is merely for distinguishing similar objects rather than a special order of the objects. It can be understood that the "first/second/third" may exchange a special order or sequence in an allowed condition.

It should be understood that reference throughout the description to "an embodiment" or "some embodiments" means that particular features, structures, or characteristics related to the embodiments are included in at least one embodiment of the present invention. Thus, the appearances of the phrases "in an embodiment" or "in some embodiments" in various places throughout the description are not necessarily all referring to the same embodiment. Furthermore, the particular features, structures, or characteristics may be combined in any suitable manner in one or more embodiments. It should be further understood that the sequence numbers of the foregoing processes do not mean execution sequences in the embodiments of the present invention. The execution sequences of the processes should be determined according to functions and internal logics of the processes, and should not be construed as any limitation to the implementation processes of the embodiments of the present invention. The serial numbers of the embodiments of the present invention are merely for description and do not represent a preference of the embodiments.

In the several embodiments provided in the present application, it should be understood that the disclosed device and method may be implemented in other manners. The described device embodiment is merely exemplary. For example, the module division is merely logical function division and may be other division during actual implementation. For example, multiple modules or components may be combined or integrated into another system, or some features may be ignored or not performed. In addition, the displayed or discussed mutual couplings or direct couplings or communication connections between the components may be implemented through some interfaces, and indirect couplings or communication connections between the devices or modules may be electrical, mechanical, or in other forms.

The modules described as separation parts may be or may not be physically separated. The parts displayed as modules may be or may not be physical modules, may be located in one place, or may be distributed on a plurality of network modules. Some or all of the modules may be selected according to actual requirements to implement the purpose of the solution of this embodiment.

In addition, functional modules in the embodiments of the present invention may be all integrated in a processing module, or each functional module may be separately used as one module, or two or more functional modules may be integrated into one module. The integrated module may be implemented in the form of hardware, or may be implemented in the form of hardware plus software functional modules.

A person of ordinary skill in the art may understand that, all or part of the steps of the foregoing method embodiments may be implemented by a program instructing relevant hardware. The foregoing program may be stored in a computer-readable storage medium. When the program is executed, the steps of the foregoing method embodiments are performed. The foregoing storage medium includes various mediums capable of storing a program code, such as a mobile storage device, a read-only memory (ROM), a random access memory (RAM), a magnetic disk, or an optical disk.

Alternatively, when the integrated module of the present invention is implemented in the form of a software functional module and sold or used as an independent product, the integrated module may be stored in a computer-readable storage medium. On the basis of such an understanding, the technical solutions of the embodiments of the present invention can be embodied in the form of a software product in essence or in terms of the part that contributes to the prior art, and the computer software product, stored in a storage medium, includes several instructions to cause an electronic device (which may be a personal computer, a server, a network device, or the like) to execute all or part of the steps of the above-mentioned method in the embodiments of the present invention. The aforementioned storage medium includes a medium that may store a program code, such as a mobile storage device, a ROM, a RAM, a magnetic disk, or an optical disk. In this way, the embodiments of the present invention are not limited to any specific combination of hardware and software.

The foregoing descriptions are only preferred embodiments of the present invention, but are not intended to limit the protection scope of the present invention. Any modification, equivalent replacement and improvement and the like made within the spirit and principle of the present invention shall be included in the protection scope of the present invention.

## Claims

1. A method for monitoring an automobile based on a satellite, the method comprising the following steps:
acquiring first information of the automobile;
sending the first information to the satellite through a satellite data transfer unit DTU; and
receiving and displaying second information from a cloud monitoring platform.

2. The method for monitoring the automobile based on the satellite according to claim 1, **characterized in that** the step of acquiring the first information of the automobile comprises:
acquiring a load of the automobile through a deformation sensor;
acquiring a tire pressure of a wheel of the automobile through a pressure sensor; and
acquiring a temperature of a wheel hub of the automobile through a temperature sensor.

3. The method for monitoring the automobile based on the satellite according to claim 2, **characterized in that** acquiring the load of the automobile through the deformation sensor comprises:
acquiring deformation data of the wheel hub of the automobile after being loaded through the deformation sensor; and
acquiring the load of the automobile by processing the deformation data through a preset algorithm.

4. A method for monitoring an automobile based on a satellite, the method comprising the following steps:
receiving first information from the satellite;
acquiring second information by pre-processing the first information; and
sending the second information to the automobile.

5. The method for monitoring the automobile based on the satellite according to claim 4, **characterized in that** the step of receiving the first information from the satellite comprises:
receiving the first information from the satellite through a ground gateway station.

6. An apparatus for monitoring an automobile based on a satellite, the apparatus comprising an acquisition module, a sending module, and a receiving module, **characterized in that**
the acquisition module is configured to acquire first information of the automobile;
the sending module is configured to send the first information to the satellite through a satellite data transfer unit DTU; and
the receiving module is configured to receive and display second information from a cloud monitoring platform.

7. A device for monitoring an automobile based on a satellite, the device comprising:
a monitoring unit configured to acquire deformation data of a wheel hub, a tire pressure of a wheel and a temperature of a wheel hub;
a satellite communication unit configured to send data acquired by the monitoring unit to the satellite; and
a display unit configured to display second information received from a cloud monitoring platform.

8. The device for monitoring the automobile based on the satellite according to claim 7, **characterized in that** the monitoring unit comprises a deformation sensor, a pressure sensor and a temperature sensor; the satellite communication unit comprises a satellite DTU; and the display unit comprises a display screen.

9. A vehicle-mounted computer, the vehicle-mounted computer comprising a memory, a communication bus and a processor, **characterized in that**
the memory is configured to store a method program for monitoring an automobile based on a satellite;
the communication bus is configured to implement connection communication between the memory and the processor; and
the processor is configured to execute the method program for monitoring the automobile based on the satellite stored in the memory to implement the steps of the method for monitoring the automobile based on the satellite according to any one of claims 1-3.

10. A computer-readable storage medium, **characterized in that** an executable program is stored on the computer-readable storage medium, and the executable program, when executed by a processor, implements the steps of the method for monitoring the automobile based on the satellite according to any one of claims 1-3.
